# FASCICULE DE BREVET EUROPEEN

(11) **EP 0 769 748 B1**
(45) Date de publication et mention de la délivrance du brevet: **02.12.1998**
(21) Numéro de dépôt: 96470020.7
(22) Date de dépôt: 27.09.1996
(51) Int. Cl.: G06F 13/42

(54) **Cellule intégrable DDC dédiée à un microprocesseur**
Integrierbare DDC-Schnittstelle für einen Mikroprozessor
Integrable microprocessor-dedicated DDC cell

(30) Priorité: 19.10.1995 FR 9512474
(43) Date de publication de la demande: 23.04.1997
(73) Titulaire: SGS-THOMSON MICROELECTRONICS S.A., 94250 Gentilly (FR)
(72) Inventeur: Marsanne, Sébastien, 57000 Metz (FR); Maquin, Francis, 57000 Metz (FR)
(74) Mandataire: Schmit, Christian Norbert Marie

(56) Documents cités:
- EP-A- 0 708 399
- US-A- 5 159 684
- EDN - ELECTRICAL DESIGN NEWS, vol. 38, no. 16, 5 Août 1993, NEWTON, MA, US, pages 119-122, XP000387290 R. WEISS: "8-bit uPD 780xxx combines uC with I2C bus"
- NEC RES. & DEVELOP., vol. 32, no. 3, Juillet 1991, pages 350-360, XP000265878 TETSURO KANAI ET AL: "A 16-bit Microcomputer uPD70423 for Serial Communication"

## Description

La présente invention a pour objet une cellule interface intégrable DDC dédiée à un microprocesseur, par exemple le ST7 de SGS-THOMSON Microelectronics. Cette invention est en particulier utilisable dans des circuits intégrés dédiés à un microprocesseur pour gérer des protocoles de communication série définis par la norme DDC.

La norme DDC du comité VESA définit des protocoles de communication série. Il existe plusieurs protocoles, entre autre DDC1, DDC2B, DDC2AB. Les protocoles DDC2B et DDC2AB utilisent des moyens de communication matériels identiques qui se regroupent dans l'appellation I2C. Par extension, le terme protocole I2C sera utilisé dans la suite de ce document pour désigner ces deux protocoles DDC2B et DDC2AB. Les différences majeures entre les protocoles DDC1 et I2C sont:
- l'horloge représentée par le signal Vsync est synchrone pour le protocole DDC1 et l'horloge représentée par un signal SCL est asynchrone pour le protocole I2C,
l'échange de données est unidirectionnel pour DDC1 et bidirectionnel pour I2C.

Il existe déjà une cellule interface dédiée aux protocoles I2C. Cette cellule qui autorise des transfert selon les protocoles DDC2B et DDC2AB, sert dans des applications de communication entre un microprocesseur par exemple celui d'un micro ordinateur et des périphériques tels que clavier, souris ou autre. Les protocoles I2C autorisent un transfert entre deux périphériques par un système d'adressage de périphérique d'un maître vers un esclave. Le protocole DDC2B permet à un maître d'adresser un esclave parmi plusieurs. Le protocole DDC2AB améliore le système en proposant la possibilité d'utiliser un mode multimaître qui autorise plusieurs maîtres suivant le même type d'échanges.

La norme DDC du comité VESA a défini la possibilité d'utiliser simultanément un protocole DDC1 avec un protocole I2C en utilisant des moyens communs. Il n'existe cependant pas à l'heure actuelle de cellule interface permettant d'utiliser simultanément les protocoles DDC1 et I2C. Transformer une cellule I2C déjà existante en cellule DDC1 n'est pas a priori très pratique au vu des problèmes posés.

L'invention a pour but de résoudre le problème défini précédement. Selon l'invention, on résout ce problème en utilisant une cellule interface pour protocole I2C que l'on va forcer dans un certain mode de fonctionnement afin qu'elle fonctionne également avec le protocole DDC1. L'invention concerne donc une cellule interface de circuit intégré dédiée à un microprocesseur et qui comporte:
- un premier circuit d'entrée/sortie de données relié à un bus de données de ce microprocesseur,
- un deuxième circuit d'entrée/sortie de données relié à un réseau de communication fonctionnant selon au moins deux protocoles différents dits DDC1 et I2C,
- un circuit de traitement de données connecté entre le premier circuit d'entrée/sortie de données et le deuxième circuit d'entrée/sortie de données,
- un circuit de commande comprenant un séquenceur, le circuit de commande étant géré par le séquenceur, le circuit de commande communiquant avec un bus de commande de ce microprocesseur, le circuit de commande communiquant avec le deuxième circuit d'entrée/sortie de données,
caractérisée en ce qu'elle comporte un circuit logique pour forcer l'état du séquenceur en fonction d'une information relative à la nature du protocole utilisé.

La cellule ainsi réalisée permet d'utiliser les protocoles I2C et DDC1. La cellule est capable de changer de protocole afin de pouvoir alterner les deux protocoles suivant certaines conditions.

Une caractéristique complémentaire de l'invention est d'utiliser un premier bit d'état situé dans un registre du circuit de commande afin d'indiquer au système le protocole utilisé.

Le comité VESA qui a défini la norme DDC impose par ailleurs, lorsque l'on utilise le protocole DDC1 simultanément avec les protocoles I2C, que l'on puisse basculer automatiquement dans un protocole I2C.

L'invention résout ce cas de priorité pour les protocoles I2C. Avec l'invention le protocole DDC1 peut être abandonné par le microprocesseur, mais aussi suite à un signal de demande issu d'un périphérique.

Dans le cas du protocole DDC1, la transmission s'effectue de manière synchrone. De ce fait des contraintes temporelles apparaissent sur le bus du microprocesseur. Or le microprocesseur peut avoir à traiter des données autres au moment où devrait s'effectuer le transfert. Par exemple le transfert de donées peut monopoliser le microprocesseur pendant un certain temps qui peut s'avérer génant si le microprocesseur doit faire d'autres opérations plus importantes inopinément.

Selon l'invention, l'association d'un circuit d'accès mémoire direct avec la cellule DDC libère le microprocesseur du transfert des données. Il n'a plus qu'à s'occuper des ordres de transfert de données.

Selon l'invention un bit de contrôle situé dans un registre du circuit de commande peut indiquer à la cellule de suspendre le transfert de données.

Cependant, en accès mémoire direct, lorsqu'une erreur se produit dans la transmission, le microprocesseur n'est pas averti. Ceci peut entrainer la prise en compte de données erronées.

Dans l'invention un deuxième bit d'état situé dans un registre du circuit de commande peut indiquer au microprocesseur qu'une erreur s'est produite au cours de la transmission.

D'autres caractéristiques et avantages de l'invention apparaîtront au cours de la description faite au regard des dessins annexés, donnés uniquement à titre d'exemple et sur lesquels:
la figure 1 représente un réseau de communication fonctionnant suivant les protocoles DDC1, DDC2B, DDC2AB;
la figure 2 représente un système maître comprenant un microprocesseur avec sa mémoire et une cellule de communication I2C détaillée selon l'état de la technique;
la figure 3 représente une machine d'état simplifiée représentant les états principaux du séquenceur selon l'état de la technique;
la figure 4 représente un système maître comprenant un micro processeur avec sa mémoire et une cellule de communication DDC détaillée selon l'invention.

Le protocole DDC1 fonctionne avec une horloge synchrone dont le signal Vsync est appliqué sur un premier fil de communication.

Les protocoles I2C fonctionnent avec une horloge asynchrone dont le signal SCL est appliqué à un deuxième fil de communication.

Tous les protocoles utilisent un fil de données pour transporter le signal SDA.

Les protocoles de la norme DDC utilisent, dans les liaisons de la cellule interface avec le réseau de communication, des connexions de type drain ouvert ou collecteur ouvert avec résistance de tirage à l'état haut. Aussi lorsqu'un quelconque des éléments qui est connecté à ce réseau décide de mettre une ligne à zéro, la ligne est mise à zéro.

Le protocole DDC1 comporte un maître unique et fonctionne comme suit:
- le maître du réseau de communication émet continuellement un signal d'horloge Vsync sur le premier fil de communication;
- le maître et les esclaves sont configurés dès la mise sous tension dans un état défini, le maître est soit émetteur soit récepteur
- les données sont envoyées, cadencées par le signal Vsync: l'émetteur envoie huit bits puis le recepteur envoie un bit d'acquittement et le processus recommence.

Dans le cas qui nous intéresse, le maître, c'est à dire la cellule interface de l'invention, est émetteur et envoie un message cyclique porté sur le signal SDA.

Les protocoles I2C fonctionnent différement. Un maître envoie un message composé d'une adresse de sept bits pour adresser un esclave, et d'un huitième bit pour indiquer à l'esclave si celui-ci doit se mettre en mode récepteur ou émetteur. Dans le DDC2B, le réseau ne comporte qu'un seul maître alors que dans le DDC2AB le réseau peut supporter plusieurs maîtres. Dans la présente description de l'invention, on traitera le cas DDC2AB qui englobe le cas DDC2B. Le signal SCL est produit par celui des maîtres qui débute la transmission.

Le protocole DDC2AB se déroule comme suit:
1 - au départ, personne ne parle, le signal SCL est à l'état haut (VCC);
2 - un maître veut prendre la parole, il force le signal SDA à l'état bas (0V), puis le signal SCL à l'état bas, cela correspond à un début de transmission (les autres éléments reliés à ce réseau détectent cette situation et se mettent en attente);
3 - le maître qui a pris la parole envoie sur le fil de donnés portant le signal SDA sept bits de données qui correspondent à une adresse de périphérique sur le réseau, suivi d'un huitième bit de données qui indique dans quel mode d'émission ou de réception doit se placer le périphérique. Chaque bit de données doit être dans un état valide sur un front montant et un état haut de SCL. Le maître continue de produire le signal SCL de synchronisation pendant toute la durée de la transmission.
4 - le périphérique qui a reconnu son adresse envoie un état bas sur le signal SDA. Cet état bas doit être valide au moment du prochain front montant de SCL,
5 - la transmission se déroule alors sur neuf cycles du signal SCL, comme suit:
   T1 - l'émetteur envoie huit bits sur SDA validés sur les fronts montant de SCL,
   T2 - le récepteur envoie un état bas sur SDA validé sur un front montant de SCL,
   T3 - retour à T1.
6 - la transmission se termine lorsque l'émetteur fait passer le signal SDA d'un niveau bas vers un niveau haut pendant un état haut du signal SCL. Le maître cesse alors l'émission du signal SCL qui reste au niveau haut, le signal SDA restant aussi au niveau haut.

Le fait d'utiliser des drains ouverts ou des collecteurs ouverts pour piloter les lignes du réseau permet à un périphérique plus lent de maintenir SCL à zéro pendant une durée qui lui permet d'assimiler la donnée de SDA. Cela a pour effet de ralentir la transmission et de faire attendre un élément plus rapide lors d'une transmission.

Dans le cas ou plusieurs maître veulent transmettre simultanément des données, il peut se produire que deux maîtres envoient en même temps le signal de début de transmission. Il y a conflit lorsque les deux prises en main du réseau arrivent simultanément. Les deux maîtres envoient donc ensemble l'adresse d'un périphérique différent. Le premier de ces maîtres qui s'aperçoit qu'un bit à zéro est transmis à la place d'un bit à un qu'il voulait transmettre cesse son action de maître de réseau. Ce maître qui vient de perdre la main continu de déchiffrer l'adresse qui était émise et se comporte comme un esclave.

Dans la définition de la norme DDC, la possibilité de travailler avec le protocole DDC1 simultanément avec un protocole I2C impose d'abandonner automatiquement le protocole DDC1 au profit d'un protocole I2C dès que l'on a une mise à zéro du signal SCL.

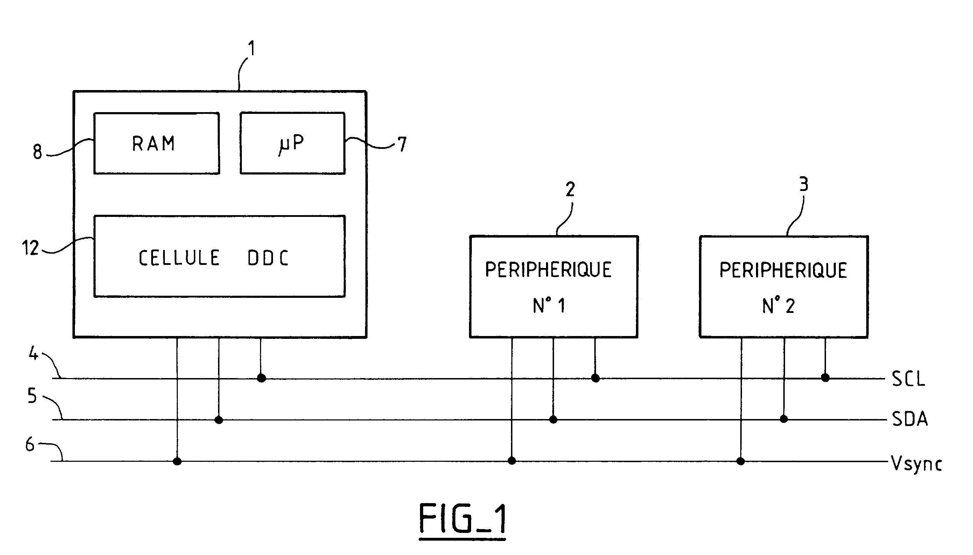

Un réseau fonctionnant suivant ces trois protocoles est décrit sur la figure 1.

Le réseau de la figure 1 comporte un système maître 1 contenant un microprocesseur 7 et une cellule 12 faisant l'objet de l'invention, un premier périphérique 2, et un deuxième périphérique 3. Ces trois éléments sont reliés ensemble par l'intermédiaire d'une première ligne 4 portant le signal SCL, d'une deuxième ligne 5 portant le signal SDA, d'une troisième ligne 6 portant le signal Vsync.

Avant de décrire un système maître 1 fonctionnant suivant les protocoles DDC1 et I2C, il est préférable de commencer par un système maître comprenant une cellule de communication fonctionnant selon le protocole I2C telle qu'elle existe dans l'état de la technique.

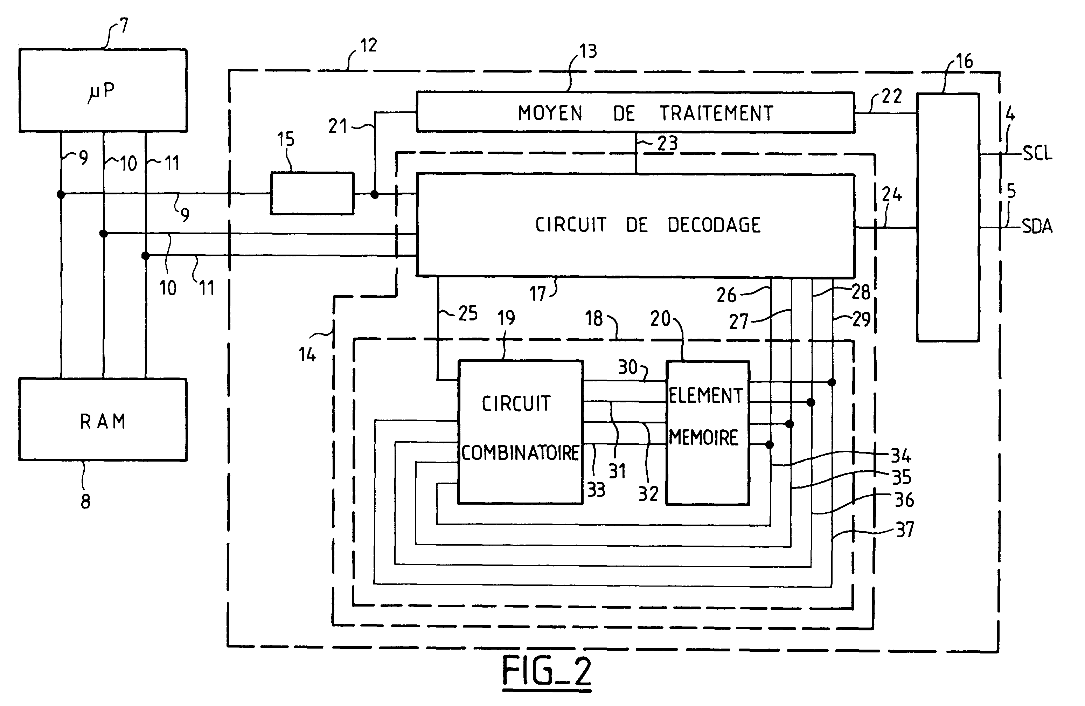

La figure 2 détaille de manière plus précise le système maître dans l'état de la technique. Un microprocesseur 7 est relié à une mémoire 8 par l'intermédiaire d'un bus de données 9, d'un bus d'adresse 10, et d'un bus de commande 11. Parmi tous les éléments dédiés au microprocesseur 7, il a seulement été pris en compte une cellule de communication 12 selon le protocole I2C.

La cellule 12 comporte un circuit de traitement 13 de données qui traduit les données d'un format mot (en parallèle) en une chaine de bits (en série) ou l'inverse, un circuit de commande 14, un premier circuit 15 d'entrée/sortie de données et un deuxième circuit 16 d'entrée/sortie de données.

Le circuit de commande 14 comporte un circuit de décodage 17 et un séquenceur 18.

Le séquenceur 18 comporte un circuit combinatoire 19 et un circuit de mémorisation 20.

Le circuit de traitement 13 est relié au premier circuit 15 par un premier bus interne 21. Le circuit de traitement 13 est relié au deuxième circuit 16 par un premier fil 22. Le circuit de traitement 13 est relié au circuit de décodage 17 par l'intermédiaire d'un deuxième bus interne 23.

Le circuit de décodage 17 est relié au microprocesseur 7 par l'intermédiaire des bus de commande 11 et bus d'adresse 10. Le circuit de décodage 17 est relié au premier circuit 15 par le premier bus interne 21. Le circuit de décodage 17 est relié au deuxième circuit 16 par un bus de sortie 24. Le circuit de décodage 17 est relié au circuit combinatoire 19 par l'intermédiaire d'un bus de commande 25. Le circuit de décodage 17 comporte également quatre fils d'état 26, 27, 28, 29.

Le premier circuit 15 est également reliée au microprocesseur 7 par l'intermédiaire du bus de données 9.

Le deuxième circuit 16 est, dans l'état de la technique, reliée au réseau de communication sur les fils de communication 4 et 5 portant les signaux SCL et SDA.

La sortie du circuit combinatoire 19 est relié à l'entrée du circuit de mémorisation 20 par quatre fils de prochain état 30, 31, 32, 33.

La sortie du circuit de mémorisation 20 est relié à l'entrée du circuit combinatoire 19 par quatre fils d'état actuel 34, 35, 36, 37.

Les quatre fils d'état actuel 34 à 37 sont respectivement connectés aux quatre fils d'état 26 à 29. Le nombre de fil d'état peut varier sans changer fondamentalement le fonctionnement de la cellule 12.

Le circuit de décodage 17 envoie et reçoit des signaux des différents éléments composant le système maître 1. Il comporte des registres internes qui permettent de dialoguer avec le microprocesseur 7. Il comporte également des circuits de logique combinatoire très complexes qui permettent en fonction de signaux entrant d'élaborer les signaux à envoyer à toute la cellule. Ces signaux, de type connus, ne seront décrit par la suite que s'ils peuvent apporter de la clarté dans la description des autres éléments.

Les circuit de traitement 13 comporte principalement un registre à décalage avec sortie parallèle en trois états qui recevra par l'intermédiaire du deuxième bus interne 23 soit un signal de chargement parallèle, soit un signal de déchargement parallèle, soit un signal de décalage sortant, soit un signal de décalage rentrant. Dans le cas du signal de chargement parallèle, les données présentes sur le premier circuit 15 seront chargées dans le registre. Dans le cas du signal de déchargement parallèle, la sortie parallèle du registre sera activée afin que le premier circuit 15 puisse récupérer les données. Dans le cas d'un décalage sortant, le bit de poids fort d'un octet résidant dans le registre sera envoyé sur le deuxième circuit 16, les autres bits se verront décaler vers le poids immédiatement supérieur, le bit de poids faible chargera le bit de poids fort par l'intermédiaire d'un bouclage afin de ne pas perdre la données avant la fin de la transmission de l'octet. Dans le cas d'un décalage rentrant, les bits se verront décaler vers le poids immédiatement supérieur et le bit de poids faible chargera le bit présent sur le deuxième circuit 16.

Le premier circuit 15 réalise, pour simplifier, une liaison directe ou un état de haute impédance entre le bus de données 9 et le premier bus interne 21, suivant que l'on désire ou pas un couplage de ces bus.

Le deuxième circuit 16 réalise la connexion du système au réseau de communication. Ce deuxième circuit 16 est constitué de deux ports assurant, pour l'un, soit la sortie des données, soit l'entrée des données sur le premier fil de communication 4 portant le signal SCL, et pour l'autre le contrôle ou le non contrôle du deuxième fil de communication 5 portant le signal SDA. L'état dans lequel travaille chaque port est directement commandé par le circuit de décodage 17 par l'intermédiaire du bus de sortie 24.

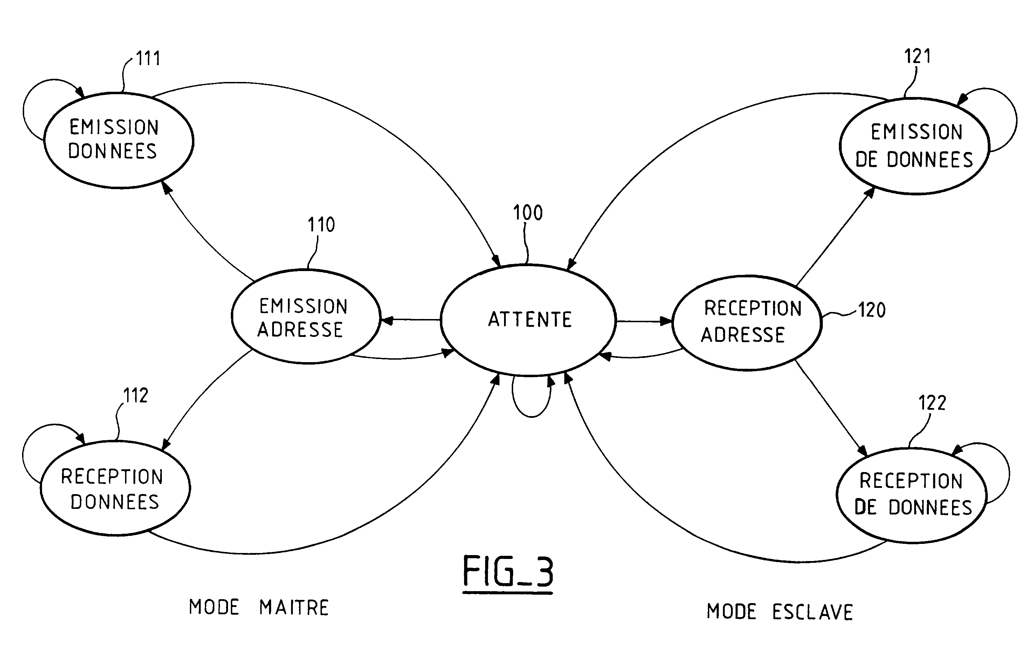

Le séquenceur 18, comporte un circuit combinatoire 19, réalisant des équations logiques, et d'un circuit de mémorisation 20, muni de quatre bascules D, indique au circuit de décodage 17 dans quelle état de transmission celui-ci se trouve et change d'état en fonction de l'état dans lequel il se trouve et de paramètres extérieurs qui lui sont donné par l'intermédiaire du bus de commande 25. La figure 3 illustre de manière simplifiée la machine d'état que réalise le séquenceur.

La machine d'état du séquenceur correspond à une machine d'état du protocole DDC2AB car le protocole DDC2B est une limitation du protocole DDC2AB. Le détail complet de la machine d'état n'apportant rien à la description, on se limitera à une machine d'état simplifiée d'où la notion de macro-état correspondant à un regroupement d'états.

L'état initial est l'état d'attente 100. On reste dans cet état tant que l'on a pas de message à transmettre ou tant que l'on ne reçoit pas de message.

Si l'on veut envoyer un message, le circuit de décodage 17 envoie un signal par l'intermédiaire du bus de commande 25 qui place le séquenceur en mode maître et le fait passer dans le macro-état d'émission d'adresse 110. Ce macro-état met en séquence l'émission d'une adresse (c'est à dire va permettre d'envoyer les sept bits d'adresse à un périphérique), le mode de fonctionnement émetteur ou récepteur du périphérique et l'attente d'un zéro sur la ligne SDA corespondant à l'acquittement du périphérique. Durant ce macro-état, les conflits éventuels entre plusieurs maîtres sont également gérés. En cas de conflit le séquenceur 18 se place dans l'état correspondant à la réception d'adresse 120 en mode esclave.

Le circuit de décodage 17 va transmettre l'acquitement et le mode choisi pour la transmission. Ceci qui fait passer le séquenceur 18 en macro-état de maître émetteur de données 111, ou en macro-état de maître récepteur de données 112.

Le macro-état de transmission, maître émetteur de données 111 ou maître récepteur de données 112, recouvre la transmission des huits bits et la transmission de l'acquitement. Le macro-état de transmission reboucle sur lui-même tant que le circuit de décodage 17 n'informe pas le séquenceur 18 de la fin de la transmission. Lorsque le séquenceur 18 est informé de la fin de la transmission, il se replace à l'état d'attente 100.

Si le circuit de décodage 17 détecte sur le deuxième entrée/sortie 16 le début d'une transmission, il fait passer le séquenceur 18 dans le macro-état de réception d'adresse 120, correspondant au mode esclave. Ce macro-état va mettre en séquence toute la réception de l'adresse et du bit de mode de fonctionnement. Si le circuit de décodage 17 ne reconnait pas l'adresse comme étant celle de la cellule 12, il l'indique au séquenceur 18 qui repasse en état d'attente 100, sinon, le séquenceur 18 continue en faisant envoyer le bit d'acquitement de la réception d'adresse.

En fonction du mode de transmission reçu, le circuit de décodage 17 indiquera si le séquenceur doit passer en macro-état d'esclave émetteur 121 ou en macro-état d'esclave récepteur 122.

Le macro-état de transmission, esclave émetteur 121 ou esclave récepteur 122, recouvre la transmission des huits bits et la transmission de l'acquitement. Le macro-état de transmission reboucle sur lui-même tant que le circuit de décodage 17 n'informe pas le séquenceur 18 de la fin de la transmission. Lorsque le séquenceur 18 est informé de la fin de la transmission, il se replace à l'état d'attente 100. Les données reçues ou émises font appel à la mémoire 8 du microprocesseur 7. Le circuit de décodage 17 enverra donc un signal d'interruption de tâche au microprocesseur 7 par l'intermédiaire du bus de commande 11. En attendant que le microprocesseur 7 effectue le transfert entre la cellule 12 et sa mémoire 8, le circuit de décodage 17 va envoyer un signal au deuxième entrée/sortie 16 pour que ce deuxième entrée/sortie 16 maintienne la ligne SCL 4 à zéro.

Là s'arrête l'état de la technique.

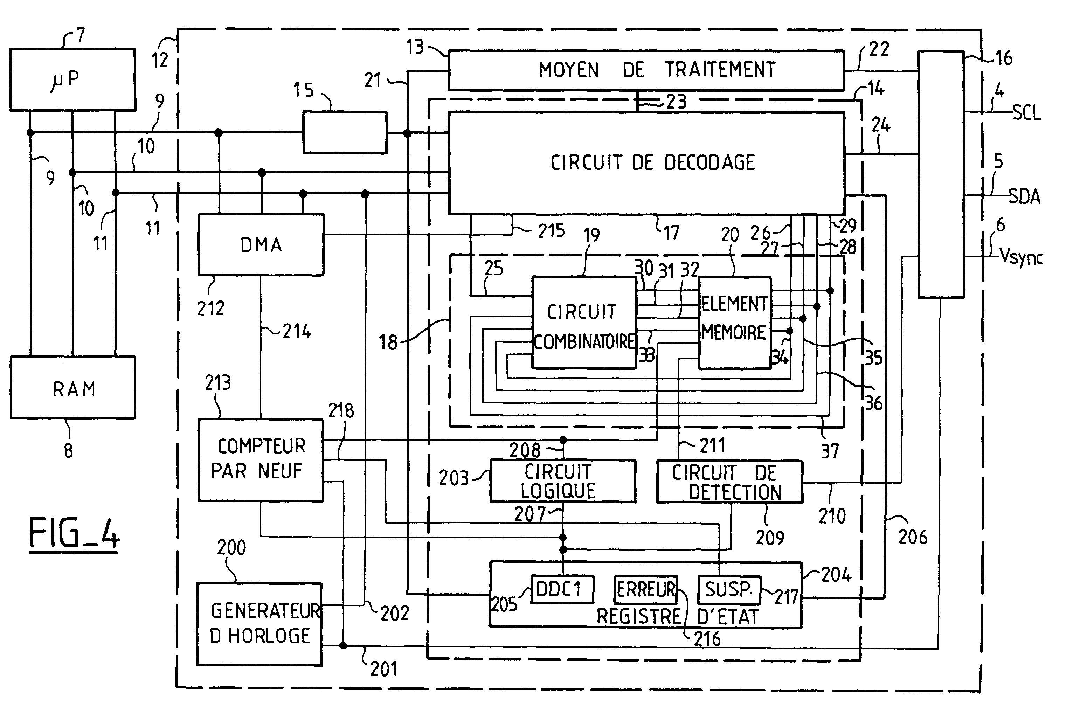

Pour pouvoir réaliser la fonctionnalité désirée, il a fallu rajouter d'autres éléments, que l'on peut voir sur la figure 4.

Il a été rajouté une connexion entre le signal Vsync 6 du réseau de communication et le deuxième cicuit 16 de la cellule 12.

Il a été rajouté dans la cellule 12 un générateur de signal d'horloge 200 relié par un fil d'horloge 201 au deuxième circuit 16 d'une part, et relié par un fil de prélèvement 202 au bus de commande 11 du microprocesseur 7. Le fil de prélèvement 202 extrait du bus de commande 11 le signal d'horloge du microprocesseur 7. Dans un exemple, le générateur 200 va utiliser la fréquence du signal d'horloge du microprocesseur 7 pour produire un signal d'horloge à 25 kHz qui sera transmis au deuxième circuit 16. Ce deuxième circuit 16 utilise ce signal horloge à 25 kHz en la reliant directement à la ligne du signal Vsync.

Il a été rajouté dans le circuit de commande 14 un circuit logique 203 et un registre d'état 204 contenant au moins un premier bit d'état 205. Le registre d'état est relié au premier circuit 15 par le premier bus interne 21, au circuit de décodage 17 par l'intermédiaire d'un troisième bus interne 206. La bascule du registre d'état 204 contenant le premier bit d'état 205 est relié au circuit logique 203 par l'intermédiaire d'un premier fil d'état 207. Le circuit logique 203 est également relié au circuit de mémorisation 20 du séquenceur 18 par l'intermédiaire d'un premier fils de forçage 208.

Le premier bit d'état 205 indique à la cellule 12 le protocole utilisé. Si le premier bit d'état 205 est à 1, le protocole est le DDC1. Sinon, il s'agit d'un protocole I2C. Dès que ce premier bit d'état 205 passe de 0 à 1, le circuit logique 203 envoie une impulsion sur le premier fils de forçage 208 qui a pour effet de forcer de manière asynchrone les bascules D du circuit 20 dans un état qui correspond, dans la machine d'état simplifié du séquenceur 18, au macro-état d'émission de données en mode esclave 121. Dans ce mode de transmission, la cellule 12 ne produit aucune synchronisation de SCL et se contente de transmettre les données que lui transmet le microprocesseur 7. Afin que le microprocesseur 7 puisse fournir les données de manière synchrone avec Vsync, le circuit de décodage 17 produit une interruption sur le bus de commande 11 du microprocesseur 7. Le microprocesseur 7 devra alors s'occuper du transfert de donnée depuis sa mémoire 8 jusqu'à la cellule 12. On remarque que, dans ce cas, la cellule ne peut pas attendre car il n'y a pas de possibilité de ralentir Vsync alors qu'en I2C, on peut faire attendre SCL. Autrement dit le microprocesseur 7 doit être suffisament rapide pour pouvoir se dégager de la tâche en cours et effectuer le transfert.

Le premier bit d'état 205 ne peut être imposé que par une action du microprocesseur 7 qui décide de faire fonctionner la cellule 12 dans le protocole DDC1. Tant que le premier bit d'état 205, dit aussi bit DDC1, est activé au niveau un, le séquenceur 18 reste bloqué en mode esclave émetteur 121.

Le comité VESA a prévu, pour que les protocoles I2C soient prioritaires par rapport au protocole DDC1, que le passage du signal SCL à un niveau bas entraine le passage en protocoles I2C.

Un circuit de détection 209 est rajouté pour cette fonctionnalité. Le circuit de détection 209 est connecté au deuxième circuit 16 par l'intermédiaire d'un fil de détection 210. Le circuit de détection 209 est connecté au circuit de mémorisation 20 par l'intermédiaire d'un deuxième fil de forçage 211. Le circuit de détection 209 est également relié à la bascule du registre d'état 204 contenant le premier bit d'état 205 par l'intermédiaire du premier fil d'état 207.

Dans le deuxième circuit 16, le fil de détection 209 est relié au premier fil de communication 4 portant le signal SCL. Le circuit de détection 209 produit une impulsion positive sur le deuxième fil de forçage 211 si la ligne SCL 4 présente un front descendant pendant que le premier bit d'état 205 est à 1. Le deuxième fil de forçage 211 a pour effet sur le circuit de mémorisation 20 de forcer le séquenceur 18 à se placer en état d'attente 100. Le message en cours de transmission avec le protocole DDC1 y est même interrompu sans attendre la fin d'une transmission.

Par contre lorsque le microprocesseur 7 remet à zéro le premier bit d'état 205, la transmission s'achève à la fin de l'octet en cours de transmission. Le séquenceur se positionne ensuite en état d'attente.

Il a été vu précédement que lors d'une transmission, la cellule 12 demande au microprocesseur 7 d'effectuer des transfert de données avec la mémoire. Dans le cas du protocole DDC1 le transfert doit se faire sans attente car il n'est pas possible de ralentir l'horloge Vsync. Pour que le microprocesseur 7 effectue le transfert, il faut d'abord que celui-ci mette en attente la tâche en cours ce qui peut parfois prendre un certain temps.

L'invention utilise pour remédier à ce problème un circuit de gestion 212 d'accès mémoire direct, et un compteur 213 par neuf rajoutés dans la cellule 12. Le circuit de gestion 212 est relié au microprocesseur 7 par l'intermédiaire du bus de données 9, du bus d'adresse 10 et du bus de commande 11. Le circuit de gestion 212 est relié au compteur 213 par l'intermédiaire d'un premier fil de priorité 214. Le circuit de gestion 212 est relié au circuit de décodage 17 par l'intermédiaire d'un deuxième fil de priorité 215. Le compteur 213 est relié au générateur 200 de signal d'horloge par l'intermédiaire du fil d'horloge 201. Le compteur 213 est relié au circuit logique 203 par l'intermédiaire du premier fil de forçage 208. Le compteur 213 est relié à la bascule du registre d'état 204 qui contient le premier bit d'état 205 par l'intermédiaire du premier fil d'état 207.

Le circuit de gestion 212 se substitue au microprocesseur 7 pour les transferts de données entre la cellule 12 et la mémoire 8.

Dans le cas du protocole DDC1, le microprocesseur 7 informe le circuit de gestion 212 de l'emplacement dans la mémoire 8 des données à transmettre. Autrement dit, le microprocesseur 7 va envoyer au circuit de gestion 212 l'adresse de début de message et la longueur du message par l'intermédiaire du bus de données. Le compteur 213 est remis à zéro lors du passage en mode DDC1 par l'intermédiaire du premier fil de forçage 208. Le premier fil d'état 207 autorise le comptage de ce compteur 213. Le compteur 213 compte le nombre d'impulsions d'horloge sur le fil d'horloge 201. Toutes les neuf impulsions, le compteur par neuf 213 envoie une impulsion sur le premier fil de priorité 214. Le circuit de gestion 212 reçoit l'impulsion du premier fil de priorité 214 et positionne sur le bus de commande 11 du microprocesseur 7 un signal d'interruption de transfert qui va mettre toutes les sortie du microprocesseur en haute impédance. Le circuit de gestion 212 envoie ensuite à la mémoire 8 des signaux sur les bus d'adresse 10 et bus de contrôle 11 qui effectuent le transfert de données avec la cellule. Le transfert terminé, le circuit de gestion 212 repositionne sur le bus de commande 11 le signal d'interruption de transfert en mode normal et le microprocesseur 7 reprend le contrôle des bus d'adresse 10 et bus de commande 11.

Dans le cas de protocoles I2C, il est également intéressant de pouvoir assister le microprocesseur 7. Cela permet de ne pas ralentir la transmission d'une part et de ralentir de manière moins importante la tâche en cours sur le microprocesseur 7. C'est pourquoi dans le fonctionnement en protocole I2C, le circuit de décodage 17 de l'invention envoie une impulsion sur le deuxième fil de priorité 215 au lieu d'envoyer une interruption de tâche sur le bus de commande 11. Le circuit de gestion 212 va traiter cette impulsion venant du deuxième fil de priorité 215 de la même manière qu'une information venant du premier fil de priorité 214. Tant que la cellule 12 fonctionne en protocoles I2C, le compteur 213 est inhibé par le premier fil d'état 207.

Le circuit décrit ci-dessus ne détecte pas les erreurs dûes à un défaut de transmission. Afin d'éviter d'utiliser des données erronnées, la cellule 12 possède dans le registre d'état 204 un deuxième bit d'état 216. Ce deuxième bit d'état 216 est accessible, pour le microprocesseur 7, par le bus de données 9, le première circuit 15, et le premier bus interne 21. Ce deuxième bit d'état 216 est également accessible au circuit de décodage 17 par l'intermédiaire du troisième bus interne 206.

Le deuxième bit d'état 216 est imposé à un lorsqu'une erreur matérielle est détectée par la cellule 12. L'erreur pouvant être dûe à un fil déconnecté par exemple, il est possible de la détecter par la constatation d'aberration dans le protocole de transmission, ou par l'absence de réponse d'acquittement dans un délai maximum. Le microprocesseur 7 peut consulter le registre d'état 204 qui contient le deuxième bit d'état 216 afin d'être renseigné sur la validité d'une transmission.

Dans le cas d'une erreur de transmission, il n'est pas nécessaire de continuer le transfert des données. De plus, le microprocesseur 7 peut avoir des transferts de données qui possède un degré de priorité supérieur aux transferts demandés par la cellule.

Il a été prévu pour résoudre ce problème d'utiliser un bit de contrôle 217 placé lui aussi dans le registre d'état 204. La valeur de ce bit de contrôle 217 peut être imposé par le microprocesseur 7 par l'intermédiaire du bus de données 9, de la première entrée/sortie 15, et du premier bus interne 21. Ce bit de contrôle 217 est également positionnable par le circuit de décodage 17 par l'intermédiaire du troisième bus interne 206. Ce bit de contrôle est aussi relié au compteur 213 par l'intermédiaire d'un deuxième fil d'état 218.

Lorsque ce bit de contrôle 217 est actif, tous les transferts de données avec la mémoire 8 doivent être suspendus. Le compteur 213 est alors inhibé et le circuit de decodage 17 ne demande plus de transfert de données dès que le bit de contrôle 217 est activé.

Le deuxième bit d'état 216 et le bit de contrôle 217 peuvent être confondu afin d'augmenter la capacité d'intégration.

## Revendications

1. Cellule interface (12), d'un circuit intégré, dédiée à un microprocesseur (7) comportant:
- un premier circuit (15) d'entrée/sortie de données reliée à un bus de données (9) de ce microprocesseur (7),
- un deuxième circuit (16) d'entrée/sortie de données reliée à un réseau de communication fonctionnant selon au moins deux protocoles différents dits DDC1 et I2C,
- un circuit de traitement de données (13) connecté entre le premier circuit d'entrée/sortie de données (15) et le deuxième circuit d'entrée/sortie de données (16),
- un circuit de commande (14) muni d'un séquenceur (18), le circuit de commande (14) étant géré par le séquenceur (18), le circuit de commande (14) communiquant avec un bus de commande (11) de ce microprocesseur (7), le circuit de commande (14) communiquant avec le deuxième circuit d'entrée/sortie de données (16);
caractérisée en ce qu'elle comporte un circuit logique (203) pour forcer l'état du séquenceur (18) en fonction d'une information relative à la nature du protocole utilisé.

2. Cellule (12) selon la revendication 1, caractérisée en ce que l'information relative à la nature du protocole est représentée par un premier bit d'état (205) contenu dans un registre d'état (204) du circuit de commande (14) dont l'état est déterminé par le microprocesseur (7), le forçage dans un premier mode de fonctionnement correspondant à un premier desdits protocoles s'effectue lors de la mise à un premier niveau de ce premier bit d'état (205).

3. Cellule (12) selon l'une des revendications 1 ou 2, caractérisée en ce que le forçage dans un deuxième mode correspondant à un deuxième desdits protocoles s'effectue lors de la mise à un deuxième niveau de ce premier bit d'état (205) contenu dans le circuit de commande (14), le positionnement du premier bit d'état (205) dans ce deuxième niveau pouvant être fait par un signal venant du réseau de communication, par l'intermédiaire du deuxième circuit (16) d'entrée/sortie de données, ou par le microprocesseur (7).

4. Cellule (12) selon la revendication 3, caractérisé en ce qu'elle comporte un accès mémoire direct (212) pour gérer une mémoire (8) du microprocesseur (7) en se substituant à ce microprocesseur (7).

5. Cellule (12) selon la revendication 4, caractérisée en ce que le circuit de contrôle (14) comporte dans un registre d'état (204) un deuxième bit d'état (216) qui signale une détection d'une erreur.

6. Cellule (12) selon l'une des revendications 4 ou 5, caractérisé en ce que le circuit de contrôle (14) comporte dans un registre d'état (204) un bit de contrôle (217) qui suspend le transfert des données.

## Patentansprüche

1. Schnittstelle (12) einer integrierten Schaltung für einen Mikroprozessor (7) mit:
- einer ersten Dateneingabe-/Datenausgabeschaltung (15), die an einen Datenbus (9) des Mikroprozessors (7) angeschlossen ist,
- einer zweiter Dateneingabe-/Datenausgabeschaltung (16), die an ein Kommunikationsnetzwerk angeschlossen ist, das mit wenigstens zwei unterschiedlichen, DDC1 und I2C genannten Protokollen arbeitet,
- einer Datenverarbeitungsschaltung (13), die zwischen der ersten Dateneingabe-/Datenausgabeschaltung (15) und der zweiten Dateneingabe-/Datenausgabeschaltung (16) angeschlossen ist,
- einer Steuerschaltung (14) mit einem Sequenzer (18), wobei die Steuerschaltung (14) von dem Sequenzer (18) gesteuert wird und die Steuerschaltung (14) mit einem Befehlsbus (11) des Mikroprozessors (7) kommuniziert und die Steuerschaltung(14) mit der zweiten Dateneingabe-/Datenausgabeschaltung (16) kommuniziert,
**gekennzeichnet** durch
eine logische Schaltung (203), die den Zustand des Sequenzers (18) in Abhängigkeit von einer Information, die die Art des verwendeten Protokolls betrifft, einstellt.

2. Schnittstelle (12) nach Anspruch 1,
wobei die die Art des verwendeten Protokolls betreffende Information durch ein erstes Statusbit (205) dargestellt wird, das in einem Statusregister (204) der Steuerschaltung (14) enthalten ist, wobei der Status durch den Mikroprozessor (7) bestimmt wird und wobei das Einstellen auf eine erste Betriebsart, das einem ersten der Protokolle entspricht, erfolgt, wenn das erste Statusbit (205) auf ein erstes Niveau gebracht wird.

3. Schnittstelle (12) nach einem der Ansprüche 1 oder 2,
wobei das Einstellen auf eine zweite Betriebsart, die einem zweiten der Protokolle entspricht, erfolgt, wenn das erste Statusbit in der Steuerschaltung auf ein zweites Niveau gesetzt wird, wobei die Positionierung des ersten Statusbits (205) auf das zweite Niveau durch ein Signal vom Kommunikationsnetzwerk durch die zweite Dateneingabe-/Datenausgabeschaltung (16) oder vom Mikroprozessor (7) erfolgen kann.

4. Schnittstelle (12) nach Anspruch 3,
wobei sie einen direkten Arbeitsspeicherzugriff (212) zur Steuerung eines Speichers (8) des Mikroprozessors (7) aufweist, indem sie sich an die Stelle des Mikroprozessors (7) setzt.

5. Schnittstelle (12) nach Anspruch 4,
wobei die Kontrollschaltung (14) in einem Statusregister (204) ein zweites Statusbit (216) aufweist, das einen Fehler anzeigt.

6. Schnittstelle (12) nach einem der Ansprüche 4 oder 5,
wobei die Kontrollschaltung (14) in einem Statusregister (204) ein Kontrollbit (217) aufweist, das den Transfer von Daten unterbindet.

## Claims

1. Interface cell (12) of an integrated circuit, dedicated to a microprocessor (7), comprising :
- a first data input/output (15) connected to a data bus (9) of this microprocessor (7),
- a second input/output circuit (16) connected to a communication network operating according to at least two different protocols known as a DDC1 and IC2,
- a data processing circuit (13) connected between the first data input/output circuit (15) and the second data input/output circuit (16),
- a control circuit (14) provided with a sequencer (18), the control circuit (14) being managed by the sequencer (18), the control circuit (14) communicating with a control bus (11) of this microprocessor (7), the control circuit (14) communicating with the second data input/output circuit (16) ;
characterised in that it has a logic circuit (203) for enforcing the state of the sequencer (18) as a function of an information related to the nature of the protocol used.

2. Cell (12) according to claim 1, characterised in that the item of information relating to the nature of the protocol is represented by a first status bit (205) contained in a status register (204) of the control circuit (14) whose status is determined by the microprocessor (7), the forcing into a first operating mode corresponding to a first one of the said protocols takes place when this first status bit (205) is set to a first level.

3. Cell (12) according to one of claims 1 or 2, characterised in that the forcing into a second mode corresponding to a second one of the said protocols takes place when this first status bit (205) contained in the control circuit (14) is set to a second level, the positioning of the first status bit (205) in this second level being able to be effected by a signal coming from the communication network, by means of the second data input/output circuit (16), or by the microprocessor (7).

4. Cell (12) according to claim 3, characterised in that it has a direct memory access (212) for managing a memory (8) of the microprocessor (7) by substituting itself for this microprocessor (7).

5. Cell (12) according to the claim 4, characterised in that the control circuit (14) has, in a status register (204), a second status bit (216) which indicates the detection of an error.

6. Cell (12) according to one of claims 4 or 5, characterised in that the control circuit (14) has, in a status register (204), a control bit (217) which suspends the transfer data.
